# EUROPEAN PATENT SPECIFICATION

(11) **EP 0 669 202 B1**
(45) Date of publication and mention of the grant of the patent: **10.05.2000**
(21) Application number: 95102365.4
(22) Date of filing: 20.02.1995
(51) Int. Cl.: B29D 30/06

(54) **Tire vulcanizing press**
Reifenvulkanisierpresse
Presse de vulcanisation de pneus

(30) Priority: 23.02.1994 JP 2541894
(43) Date of publication of application: 30.08.1995
(73) Proprietor: MITSUBISHI JUKOGYO KABUSHIKI KAISHA, Tokyo (JP)
(72) Inventor: Irie, Nobuhiko, c/o Nagasaki Shipyard & Mach. Wks., Nagasaki-shi, Nagasaki-ken (JP)
(74) Representative: Reinhard - Skuhra - Weise & Partner

(56) References cited:
- EP-A- 0 436 495
- EP-A- 0 552 723
- DE-A- 1 917 081
- US-A- 1 528 659
- US-A- 1 870 255
- US-A- 1 916 495
- US-A- 3 135 997
- US-A- 4 129 406

## Description

The present invention relates to a tire vulcanising press using a tire mold usually called a two-piece mold which is devided into upper and lower pieces.

EP-A-0 552 723 discloses a so called three-piece mold type tire vulcanising press, wherein a part of the mold itself is fixed to segments arranged around the mold. Therefore, with this pre-known design it is not possible to change the mold to a mold with a different mold height without changing the segments. Further, disadvantageously, a lower hot plate of this pre-known design is not adjustable in its height. To change the mold it would be necessary to exchange the segments and the associated mold portion and to change the distance of protrusions provided at said segments in accordance with the difference size of a different mold.

Therefore, it is an object of the present invention to provide a tire vulcanizing press which can be used for a different mold height with the same mold portion thereby eliminating the need for a mold pressurizing means.

To achieve this object the present invention comprises features mentioned in claim 1. A further advantageous embodiment of the invention is specified in dependent claim 2.

The present invention has the following effects:
(1) During the vulcanization of tire, the force to open the mold, which is created by the action of the heating/pressurizing medium introduced into the tire via the bladder, is cancelled by the segments via the upper and lower hot plates.
(2) As a result, a high-output pressure cylinder, which has been required on the conventional press, can be omitted.
(3) Since there is no pressure reaction acting on the press body frame, the body frame can be reduced in weight and simplified in construction.
(4) For the mold change, the mold thickness is adjusted at the lower hot plate, so that safety is improved, though conventionally it has been adjusted at a high place, that is, on a bolster plate.

### BRIEF DESCRIPTION OF THE DRAWINGS

FIG. 1 is a front view showing one embodiment of the present invention;
FIG. 2 is a view taken along the line A-A of FIG. 1; and
FIG. 3 is a sectional view taken along the line B-B of FIG. 1.

### DETAILED DESCRIPTION OF PREFERRED EMBODIMENTS

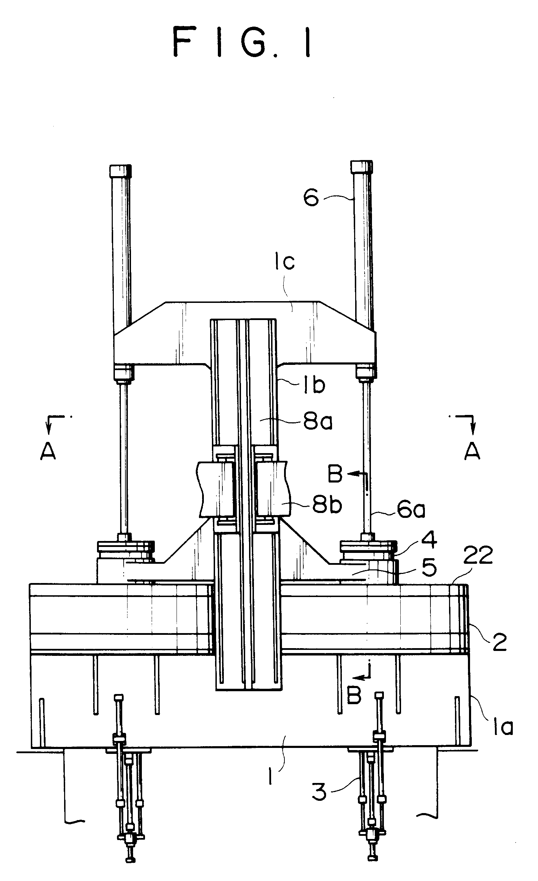

One embodiment of the present invention will be described with reference to FIGS. 1 to 3.

Reference numeral 1 denotes a body frame, 2 denotes a tire mold attaching portion, which will be described in detail later, 3 denotes a known lower central mechanism including a passage for introducing a heating/pressurizing medium into a tire via a bladder and a bladder operating mechanism for moving the bladder into the tire, 4 denotes an upper central mechanism including a known head block which incorporates a tire aligning mechanism etc., and 5 denotes a bracket to which the upper central mechanism 4 is fixed.

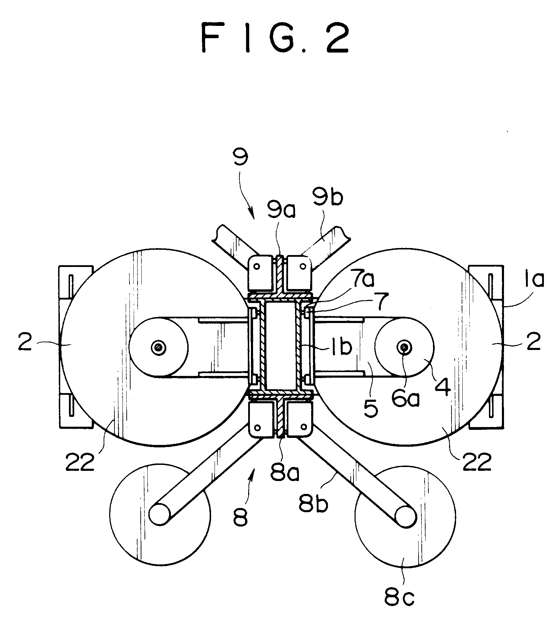

This bracket 5 is, as shown in FIG. 2, assembled to a column portion 1b of the body frame 1 via a direct-acting bearing 7 and a full-open rail 7a in such a manner as to be movable vertically. A bolster plate 22 is fixed to the bracket 5, and a piston rod 6a of a cylinder 6 fixed to an upper beam portion 1c of the body frame 1 is connected to the upper end of the upper central mechanism 4. Therefore, the bracket 5, the upper central mechanism 4, and the bolster plate 22 are moved vertically by the action of the cylinder 6.

Reference numeral 8 denotes a known green tire loading device assembled in front of the column portion 1b of the body frame 1, 8a denotes an elevation guide frame of the loading device, 8b denotes a swing arm, and 8c denotes a green tire holding basket. Reference numeral 9 denotes a known vulcanized tire unloading device assembled in rear of the column portion 1b of the body frame 1, 9a denotes an elevation guide frame of the unloading device, and 9b denotes a swing arm. A vulcanized tire holding basket is not shown.

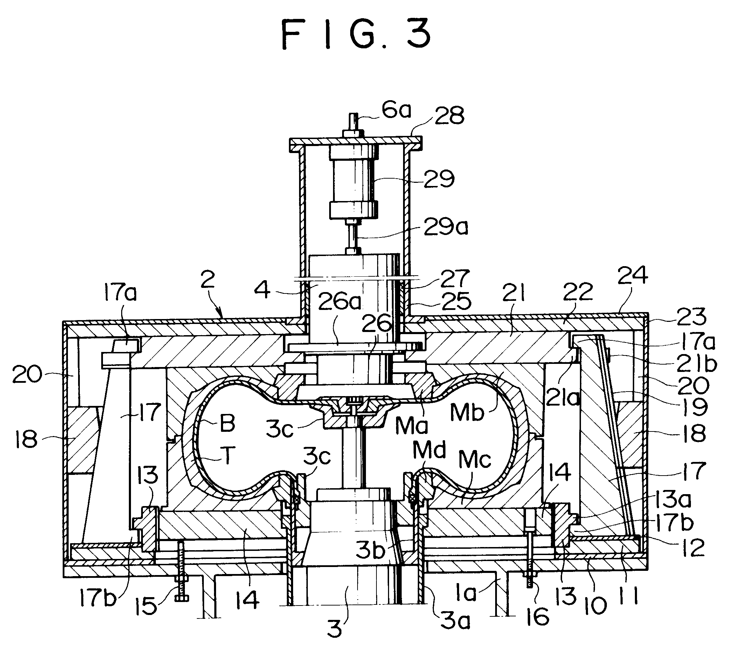

Next, the tire mold attaching portion 2 will be described. As shown in FIG. 3, on the upper surface of a base portion 1a of the body frame 1, a bottom plate 11 is fixed via a heat insulating plate 10. On the upper surface of the bottom plate 11, a ring 13 having a flange 13a on the outside is rotatably placed and a guide plate 12 is fixed. On the inner surface of the ring 13, internal threads are provided. A lower hot plate 14 having external threads at the outer periphery for engaging with the internal threads is supported by push-up bolts 15 installed to the base portion 1a, and fixed to the base portion 1a with a plurality of bolts 16. On the upper surface of the lower hot plate 14, a lower mold Mc to which a lower bead ring Md is fixed on the inside is fixed by known means. On the inside of the lower hot plate 14, an external cylinder 3a of the lower central mechanism 3 is hung.

With the two-piece mold, the mold height generally changes with the tire size. Therefore, the ring 13 and the lower hot plate 14 are threadedly coupled with each other in this embodiment. However, if the mold height is constant and the tire width is narrow, the ring 13 and the lower hot plate 14 can be integrated by increasing the thickness of the sidewall portion of the mold.

On the other hand, an upper central mechanism 4 is fixed to the bolster plate 22, and an upper hot plate 21 is fixed to a flange 26a of a head block 26 in the upper central mechanism 4. On the lower surface of the upper hot plate 21, an upper mold Mb is fixed, and an upper bead ring Ma is fixed on the inside of the upper mold Mb.

On a plurality of arms 21b extending outward radially from a flange portion 21a provided at the outer periphery of the upper hot plate 21, segments 17 are hung in such a manner as to be slidable in the radial direction. Protrusions 17a and 17b provided at the upper and lower portions of the segment 17 engage with the flange portions 21a and 13a of the upper hot plate 21 and the ring 13, respectively, when the diameter of the segments 17 is decreased. Considering the machining tolerance and other factors of each parts, it is preferable that the engagement surface be a conical surface or a pyramidal surface.

As segment moving means, an outer ring 18 is provided, which slides on the outer slant surface of the segment 17. On the inner slant surface of the outer ring 18, a T block 19 is fixed. The T block 19 is inserted into a T groove formed in the outer slant surface of the segment 17, so that the outer ring 18 and the segment 17 can slide relatively in the axial direction, and by this sliding movement the segment 17 is moved radially in such a manner as to increase/decrease the diameter thereof. The outer ring 18 is fixed to the outside portion on the lower surface of the bolster plate 22 via a spacer 20. Reference numerals 23 and 24 denote heat insulating materials.

The upper central mechanism 4 is so configured that a head block 26 which slides by the guide of a bushing 27 fixed on the inner peripheral surface of an external cylinder 25 is connected to the tip end of piston rod 29a of a cylinder 29 fixed to the external cylinder 25 via a top plate 28. By the action of the cylinder 29, the segment 17 and the outer ring 18 can slide in the axial direction.

The segment moving means is not limited to the above configuration, but other configurations are possible. For example, the rod of the cylinder installed on the upper surface of the bolster plate 22 is connected to the segment 17 via a ring, so that the segment 17 can be moved by the action of the cylinder.

Next, the operation of this embodiment will be described. FIG. 3 shows a condition in which a tire is being vulcanized. During the vulcanization of tire, a force to open the gap between the upper mold Mb and the lower mold Mc is created by the action of a vulcanizing/pressurizing medium introduced into a tire T via a bladder B. However, the upper and lower molds Mb and Mc do not open because the upper hot plate 21 and the lower hot plate 14 are held by the protrusions 17a and 17b of the segment 17 via the ring 13.

If concave portions provided on the outer peripheral surfaces of the upper and lower molds are engaged directly with the upper and lower protrusions of the segment, a force to open the upper and lower molds can be cancelled. In this case, however, wrinkles are produced at the sidewall portions of the upper and lower molds by the action of the heating/pressurizing medium, so that a gap develops between the sidewall portion and the upper or lower hot plate, by which the heat transfer effect is significantly reduced. Therefore, this configuration is undesirable.

Upon completion of the vulcanization, the cylinder 29 is operated in the direction such that the piston rod 29a is pushed out after the pressure medium is discharged. Then, the output of the cylinder 29 acts on the segments 17 via the head block 26 and the upper hot plate 21. Since the lower surface of the segment 17 abuts on the guide plate 12, the outer ring 18 is raised by the reaction via the external cylinder 25 of the upper central mechanism 4, the bolster plate 22, and the spacer 20. Thereupon, a relative movement is produced between the outer ring 18 and the segment 17, so that a gap develops between the bolster plate 22 and the upper hot plate 21, and the diameter of the segments 17 is increased. Thus, the engagement of the protrusions 17a and 17b of the segment 17 is released, so that the upper and lower molds can be opened. The upper and lower molds are opened and closed by the action of the cylinder 6. When the mold is changed to a mold with a different mold height, the bolts 16 are loosened, the height of the lower hot plate 14 is adjusted by turning the push-up bolts 15 and the ring 13, and then the bolts 16 are tightened, by which the mold can be changed by the same procedure as the conventional one.

## Claims

1. A tire vulcanizing press, having
a lower hot plate arrangement (13, 14) consisting of a hot plate (14) and a ring (13) having a radial flange portion (13a), a lower mold portion (Mc) installed on the upper surface of the lower hot plate (14),
an upper mold portion (Mb),
an upper hot plate (21) installed on the upper surface of said upper mold portion (Mb) and having a radial flange portion (21a),
a plurality of segments (17) arranged around the mold portions (Mc, Mb) independently thereof and having radially inwards protrusions (17a, 17b),
and a segment moving means (18, 20, 22, 29) for moving said segments (17) synchronously in the radial direction for engagement or disengagement of said protrusions (17a, 17b) with said flange portions (13a, 21a) to lock or release the mold portions (Mb, Mc)
said lower hot plate (14) having an external thread at the outer periphery for engaging with an internal thread at the inner surface of said ring (13) to adjust the height of the lower hot plate (14) with the change of a mold portion of different height.

2. The tire vulcanizing press according to claim 1, wherein said segment moving means comprise:
an outer ring (18) which slides on an outer slant surface of said segments (17), and
T-blocks (19) fixed on an inner slant surface of said outer ring (18),
each of said T-blocks (19) being inserted into a T-groove formed in the outer slant surface of said segments (17) so that said outer ring (18) and said segments (17) are slidable relatively in the axial direction for moving said segments (17) radially to increase/decrease the diameter of a circle formed by said segments (17).

## Patentansprüche

1. Reifenvulkanisierpresse, die einen in einen oberen Formabschnitt und einen unteren Formabschnitt unterteilte Reifenform verwendet, mit einem Flanschabschnitt, der an dem Außenumfang einer oberen Heizplatte vorgesehen ist, an deren unterer Fläche der obere Formabschnitt angebracht ist, einem Flanschabschnitt, der an dem Außenumfang einer unteren Heizplatte vorgesehen ist, an deren obere Oberfläche der untere Formabschnitt angebracht ist, einer Vielzahl von Segmenten, die jeweils an ihren oberen und unteren Enden Vorsprünge aufweisen, die in die Flanschabschnitte eingreifen, wenn die oberen und unteren Formabschnitte geschlossen sind, und mit einer Segment-Bewegungseinrichtung zur synchronen Bewegung der Segmente in Radialrichtung.

2. Reifenvulkanisierpresse nach Anspruch 1, bei der die Segment-Bewegungseinrichtung einen Außenring besitzt, der auf der äußeren geneigten Oberfläche des Segments gleitet, bei der ein T-Block an der inneren geneigten Oberfläche des Außenrings befestigt ist, wobei der T-Block in eine T-Nut eingesetzt ist, die an der äußeren geneigten Oberfläche des Segments ausgebildet ist, so daß der Außenring und das Segment relativ zueinander in Axialrichtung gleitend bewegbar sind, wobei durch diese Gleitbewegung das Segment derart bewegbar ist, daß es seinen Durchmesser erhöht oder vermindert.

## Revendications

1. Presse de vulcanisation de pneus utilisant un moule de pneus divisé an une partie de moule supérieure et une partie de moule inférieure, comprenant une partie formant bride prévue à la périphérie extérieure d'une plaque chaude supérieure ayant ladite partie de moule supérieure installée sur la surface inférieure de celle-ci, une partie formant bride étant prévue à la périphérie extérieure d'une plaque chaude inférieure ayant ladite partie de moule inférieure installée sur la surface supérieure de celle-ci, une pluralité de segments dont chacun possède, à des extrémités supérieure et inférieure de celui-ci, des saillies qui coopèrent avec lesdites parties formant brides lorsque lesdites parties de moule supérieure et inférieure sont fermées, et des moyens de déplacement des segments pour déplacer lesdits segments de manière synchrone dans la direction radiale.

2. Presse selon la revendication 1, dans laquelle lesdits moyens de déplacement des segments comprennent un anneau extérieur qui coulisse sur la surface d'inclinaison extérieure dudit segment, un bloc en T est fixé sur la surface d'inclinaison intérieure dudit anneau extérieur, et ledit bloc en T est inséré dans une gorge en T formée dans la surface d'inclinaison extérieure dudit segment, de sorte que ledit anneau extérieur et ledit segment peuvent coulisser relativement dans la direction axiale, et par ce mouvement de coulissement ledit segment est déplacé radialement de manière à augmenter/diminuer le diamètre de celui-ci.
